# EUROPÄISCHE PATENTSCHRIFT

(11) **EP 3 322 568 B1**
(45) Veröffentlichungstag und Bekanntmachung des Hinweises auf die Patenterteilung: **21.04.2021**
(21) Anmeldenummer: 16739148.1
(22) Anmeldetag: 15.07.2016
(51) Int. Cl.: B27D 5/00

(54) **ZUFÜHREINRICHTUNG FÜR BESCHICHTUNGSMATERIAL**
FEED SYSTEM FOR COATING MATERIAL
DISPOSITIF D'ALIMENTATION EN MATÉRIAU DE REVÊTEMENT

(30) Priorität: 16.07.2015 DE 102015213358
(43) Veröffentlichungstag der Anmeldung: 23.05.2018
(73) Patentinhaber: HOMAG GmbH, 72296 Schopfloch (DE)
(72) Erfinder: GÖTZ, Reiner, 72160 Horb-Diessen (DE); SCHMID, Johannes, 72181 Starzach (DE)
(74) Vertreter: Hoffmann Eitle
(86) Internationale Anmeldenummer: PCT/EP2016/066907
(87) Internationale Veröffentlichungsnummer: WO 2017/009455

(56) Entgegenhaltungen:
- EP-A1- 0 589 089
- EP-A1- 1 977 869
- EP-A1- 2 505 322
- EP-A1- 2 762 283
- EP-A2- 1 860 593
- EP-A2- 2 253 440
- DE-A1- 3 415 747
- DE-A1-102012 202 503
- DE-U- 7 124 982

## Beschreibung

### Technisches Gebiet

Die vorliegende Erfindung betrifft eine Einrichtung gemäß dem Oberbegriff des Patentanspruchs 1, zum Zuführen eines Beschichtungsmaterials zu einer Beschichtungsvorrichtung, welche Beschichtungsvorrichtung insbesondere zur Beschichtung einer Schmalseite eines plattenförmigen Werkstücks vorgesehen ist. Derartige plattenförmige Werkstücke können bspw. Möbelplatten, Küchenplatten, usw. sein oder Elemente aus dem Bereich der Bauelementeindustrie betreffen.

Eine derartige Einrichtung geht beispielsweise aus der DE 71 24 982 U hervor.

### Stand der Technik

Als Stand der Technik ist die EP 2 253 440 A2 bekannt, die eine Zufuhrvorrichtung zum Zuführen eines Beschichtungsmaterials zu einer Maschine zum Beschichten von Werkstücken betrifft. Die Zufuhrvorrichtung umfasst mindestens eine Führungseinrichtung zum Führen eines Beschichtungsmaterials, mindestens eine Fördereinrichtung zum Fördern des Beschichtungsmaterials und mindestens eine Rückhalteeinrichtung zum Rückhalten des Beschichtungsmaterials in mindestens einer Richtung. Darüber hinaus ist mindestens ein Fördererelement der Fördereinrichtung in einem Einlaufbereich der Führungseinrichtung vorgesehen.

Ferner ist eine Identifizierungsvorrichtung zum Ressourcenmanagement von Meterware gemäß EP 1 862 949 A2 bekannt. Die genannte Schrift betrifft insbesondere eine Kassette zur Aufnahme von in Rollenform vorliegendem Kantenmaterial zum Einsatz an Durchlauf-, Stationär- oder dergleichen Maschinen, umfassend ein Gehäuse zur Halterung des in Rollenform vorliegenden Kantenmaterials.

Allerdings werden gerade in letzter Zeit immer höhere Anforderungen an das Ressourcenmanagement gestellt, im Zuge dessen die Nebenzeiten möglichst gering zu halten sind und das für einen konkreten Bearbeitungsschritt benötigte Material zur richtigen Zeit in der geforderten Menge zur Verfügung gestellt werden soll.

### Gegenstand der Erfindung

Es ist ein Ziel der vorliegenden Erfindung, eine Einrichtung zum Zuführen eines Beschichtungsmaterials, insbesondere eines Kantenbands, bereitzustellen, mit der die Nebenzeiten verkürzt und das Beschichtungsmaterial gleichzeitig einfach gehandhabt werden kann.

Der Gegenstand des Anspruchs 1 stellt eine derartige Einrichtung bereit. Bevorzugte Ausführungsformen sind in den abhängigen Ansprüchen aufgeführt, und werden in der nachfolgenden Beschreibung präzisiert.

Ein Gedanke eines Ausführungsbeispiels ist es, die Bereitstellung des Beschichtungsmaterials in neuartiger Weise zu strukturieren, indem Einheiten für Beschichtungsmaterial, welche bspw. in Kassetten bereitgestellt werden, modulartig zusammengefasst werden.

Ferner ist es ein Gedanke eines Ausführungsbeispiels, welcher auch unabhängig vom zuvor genannten Aspekt betrachtet werden kann, die Zufuhr für das Beschichtungsmaterial dahingehend neu zu gestalten, dass der Bediener das Beschichtungsmaterial lediglich in einen, zum Ankoppelabschnitt relativ nahe gelegenen Aktor einlegt, der das Beschichtungsmaterial weiter transportiert.

Durch den Einsatz der Moduleinheit oder Moduleinheiten, welche wiederum die Beschichtungsmaterialeinheiten aufnehmen, ist es möglich, Beschichtungsmaterialien gruppenweise im Bereich des Ankoppelabschnitts anzukoppeln. Somit kann die Moduleinheit durch einen Bediener einer Kantenanbringungsvorrichtung vorab beschickt werden, und der Bediener wechselt dann bei Bedarf eine Moduleinheit mit mehreren, bevorzugt unterschiedlichen Beschichtungsmaterialien ein. Während des Wechsels stehen ggf. durch eine weitere Moduleinheit im Bereich des Ankoppelbereichs weiterhin Beschichtungsmaterialien zur Verfügung, so dass ein Betrieb der Kantenanbringungsvorrichtung nicht unterbrochen werden muss.

Ferner ist es möglich, Beschichtungsmaterialien bedarfsgerecht vorab zu konfektionieren, um die vielfältigen Beschichtungsmaterialien bedarfsgerecht in einen Fertigungsablauf einzugliedern.

Eine Kassette zur Aufnahme eines Beschichtungsmaterials umfasst beispielsweise ein kastenförmiges Gehäuse. Innerhalb des kastenförmigen Gehäuses ist ein Wickel des Beschichtungsmaterials (Beschichtungsmaterialeinheit) auf einem Wickelkern aufgenommen, der im Zentrum des kastenförmigen Gehäuses befestigt ist.

Zur weiteren Verdeutlichung einer Kassette, die beispielsweise in eine Moduleinheit einer Einrichtung gemäß der vorliegenden Erfindung eingewechselt werden kann, wird auf die EP 1 862 949 A2 verwiesen.

Eine derartige Kassette kann mit oder ohne einer Identifizierungsvorrichtung, beispielsweise einem RFID-Chip, bereitgestellt werden.

Gemäß einer bevorzugten Ausführungsform ist jede Moduleinheit eingerichtet, Kassetten aufzunehmen, wobei jede Kassette eine Beschichtungsmaterialeinheit aufnimmt. Somit werden die Beschichtungsmaterialeinheiten vor äußeren Auswirkungen geschützt, und können leicht handhabbar in eine Moduleinheit eingewechselt werden. Alternativ oder gleichzeitig ist es möglich, dass die Beschichtungsmaterialeinheiten ohne Kassette in einer Moduleinheit aufgenommen werden.

Ferner kann zumindest eine der Moduleinheiten eine Rasterung aufweisen, um Kassetten bestimmter Breite aufzunehmen. Somit kann eine bestimmte Moduleinheit charakteristisch für eine bestimmte Art von Beschichtungsmaterialeinheiten sein.

Unter dem Begriff "Rasterung" ist in diesem Zusammenhang beispielsweise eine Vielzahl von Einschubschienen oder Einschubführungen gemeint.

Eine Einschubschiene der Moduleinheit kann somit in eine entsprechende Vertiefung einer Kassette zur Aufnahme einer Beschichtungsmaterialeinheit eindringen, und die Kassette beim Einschub in das Gehäuse der Aufnahmevorrichtung ausrichten und führen.

Eine Einschubführung kann bspw. durch eine Vertiefung oder zwei parallel zueinander verlaufende Leisten ausgebildet sein, in die ein Vorsprung einer Kassette mit einer Beschichtungsmaterialeinheit eindringt.

Alternativ zur zuvor genannten Rasterung kann zumindest eine der Moduleinheiten einen variablen Einschub aufweisen, um Kassetten unterschiedlicher Breite aufzunehmen. Dabei stützen sich Kassetten mit Beschichtungsmaterialeinheiten ggf. gegenseitig gegenüber Innenseiten des Gehäuses der Moduleinheit ab. Auf diese Weise kann die Flexibilität bei der Verwendung einer bestimmten Moduleinheit weiter erhöht werden.

Gemäß einer anderen Ausführungsform kann die Moduleinheit auch vorgesehen sein, Beschichtungsmaterialeinheiten ohne Kassette aufzunehmen.

In einer Ausführungsform weist der Zuführabschnitt im Bereich des Ankoppelabschnitts eine Umlenkwalze auf, um ein Beschichtungsmaterial einer Beschichtungsmaterialeinheit von einer Bedienseite des Zuführabschnitts/Ankoppelabschnitts zu einer Maschinenseite der Aufnahmevorrichtung zu führen. Dieser Aufbau erleichtert die Handhabung des Beschichtungsmaterials.

Eine derartige Umlenkwalze ist besonders bevorzugt, wenn das Beschichtungsmaterial mit hoher Geschwindigkeit bewegt wird. Auf diese Weise kann die Dynamik durch die Umlenkwalze abgefedert werden.

Insbesondere im Falle geringer Bewegungsgeschwindigkeiten des Beschichtungsmaterials kann die Umlenkwalze gemäß einer alternativen Modifikation der vorliegenden Erfindung auch entfallen.

Gemäß der Erfindung weist der Ankoppelabschnitt eine elektrische Schnittstelle auf, um die Moduleinheit mit dem Zuführabschnitt elektrisch zu koppeln. Die Kopplung kann zur Energie und/oder Datenübertragung genutzt werden. Somit kann bspw. ein an der Moduleinheit vorhandenes Display mit Energie versorgt werden. Ferner kann eine an der Moduleinheit vorhandene Speichereinheit ausgelesen werden, so dass der Zuführabschnitt Informationen hinsichtlich der in der Moduleinheit befindlichen Beschichtungsmaterialien erhält. Auch kann eine an der Moduleinheit befindliche Steuereinrichtung betrieben werden. Gemäß einer weiteren Variante ist es möglich, einen in der Moduleinheit vorgesehenen Motor zu betreiben, um ein Beschichtungsmaterial zu bewegen, oder eine motorbetriebene Verriegelung der Moduleinheit am Ankoppelabschnitt zu lösen.

Gemäß einer weiteren Ausführungsform umfasst der Ankoppelabschnitt einen Anschlussbereich, um die Moduleinheit mit dem Zuführabschnitt hydraulisch, pneumatisch oder mechanisch zu koppeln. Auf diese Weise kann beispielsweise vom Ankoppelabschnitt Energie zur Moduleinheit übertragen werden. Die übertragene Energie kann beispielsweise in der Moduleinheit genutzt werden, um eine Bewegung des Beschichtungsmaterials herbeizuführen. Eine weitere Möglichkeit besteht darin, die Ankopplung der Moduleinheit vom Ankoppelabschnitt zu lösen, beispielsweise eine Verriegelung zu öffnen.

In einer weiteren Ausführungsform ist die Moduleinheit mit einer Schnittstelle versehen, die zur kabellosen Datenübertragung vorgesehen ist. Entsprechend ist im Ankoppelbereich eine entsprechende Sende- und/oder Empfangseinheit vorgesehen. Somit können beim Beschicken der Moduleinheit Informationen übermittelt werden, wodurch der vorgesehene Einsatz der Moduleinheit bereits in einen Arbeitstakt eingeplant und/oder eine Fehlbeschickung der Moduleinheit frühzeitig erkannt werden kann.

In einer weiteren Ausführungsform weist der Zuführabschnitt eine Vielzahl von Zuführführungen auf, wobei an einem Einlaufbereich jeder Zuführführung ein separat steuerbarer Aktor vorgesehen ist. Auf diese Weise kann das Einführen bzw. Einfädeln des Beschichtungsmaterials in die Zuführung erleichtert werden.

Gemäß einer weiteren Ausführungsform ist ein zustellbarer Aktor vorgesehen, der zu einer jeweiligen Zuführung bewegt werden kann. Beispielsweise kann der Aktor entlang einer bevorzugt horizontal ausgerichteten Schiene, die in vertikaler Richtung oberhalb der Zuführungen vorgesehen ist, bewegt werden. Falls ein anderes Beschichtungsmaterial durch den Aktor bewegt werden soll, so kann der Aktor in den Bereich der dieses Beschichtungsmaterial aufnehmenden Führung zugestellt/bewegt werden.

Im Falle eines zustellbaren Aktors ist diese Ausführungsform nicht auf einen einzelnen Aktor beschränkt. Vielmehr kann für einen bestimmten Bereich der Vielzahl der Zuführungen jeweils ein Aktor vorgesehen sein.

Es ist besonders bevorzugt, dass für eine Anzahl von Zuführungen, die der Anzahl der von einer Moduleinheit zugeführten Beschichtungsmaterialien entsprechen, ein zustellbarer Aktor vorgesehen ist. In diesem Fall richtet sich die Anzahl der Aktoren somit nach der Anzahl der ankoppelbaren Moduleinheiten.

Die Zustellung bzw. Bewegung des Aktors bzw. der Aktoren kann mittels eines Stellrades oder einer Antriebswelle erfolgen.

Beispielsweise ist der Aktor mit einem walzenförmigen Antreibmittel versehen, oder der zumindest eine Aktor ist als Linearaktor ausgebildet. Auch ist es möglich, eine Einlegeeinheit, insbesondere einen (mehrachsigen) Roboterarm mit einer Greifeinheit, vorzusehen, mit dem ein Ende eines Beschichtungsmaterials aufgenommen werden kann. Auf diese Weise kann die Handhabung, bspw. das Einlegen, des Beschichtungsmaterials zügig und sicher durch umgesetzt werden.

In einer Ausführungsform umfasst der Ankoppelabschnitt einen Rahmen, der die angekoppelte Moduleinheit abschnittsweise umschließt. In einem gehäuseartig ausgebildeten Ankoppelabschnitt würde eine Moduleinheit vor äußeren Einwirkungen geschützt.

Ferner ist vorgesehen, dass der Ankoppelabschnitt eine Einrastaufnahme, beispielsweise eine Öffnung, aufweist, mit der ein Einrastelement einer Moduleinheit in Eingriff gebracht werden kann. Somit wird die Moduleinheit am Ankoppelabschnitt sicher verriegelt. Die Einrastaufnahme kann beispielsweise eine Vertiefung im Boden oder in einem Wandabschnitt sein. Das Einrastelement ist bspw. ein Stift oder ein Rad der Moduleinheit. Ferner kann das Einrastelement in die Einrastaufnahme eindringen, oder umgekehrt.

In einer weiteren Ausführungsform ist die Moduleinheit mit Rollen versehen, um die Moduleinheit bewegen zu können. Auf diese Weise kann der Arbeitsablauf deutlich vereinfacht werden. Dabei kann die Moduleinheit frei verfahrbar sein.

Gemäß einer alternativen Ausführungsform ist bzw. sind eine Schiene oder mehrere Schienen am Untergrund vorgesehen, in der/denen die Moduleinheit geführt wird. Somit kann die Moduleinheit sicher und gezielt von einem Beschickungsort zum Ankoppelabschnitt bewegt werden.

Ferner betrifft die vorliegende Erfindung ein Verfahren zum Zuführen eines Beschichtungsmaterials unter Einsatz einer zuvor genannten Einrichtung.

Das Verfahren umfasst dabei die Schritte des Beschickens einer Moduleinheit mit zumindest einer Beschichtungsmaterialeinheit, Bewegen der Moduleinheit zum Ankoppelabschnitt und Ankoppeln der Moduleinheit am Zuführabschnitt. Nachfolgend kann das Beschichtungsmaterial zum Zuführabschnitt zugeführt werden.

Ferner betrifft die Erfindung eine Beschichtungsvorrichtung zur Anbringung eines Beschichtungsmaterials an einem bevorzugt plattenförmigen Werkstück (W), mit einer zuvor genannten Einrichtung.

Die Beschichtungsvorrichtung kann ein Fördermittel zum Bewegen der Werkstücke umfasst. Alternativ weist die Beschichtungsvorrichtung einen Auflagetisch oder Spannelemente, beispielsweise Greifelemente oder Vakuumspanner auf, um ein oder mehrere Werkstücke zu halten.

### Kurze Beschreibung der Zeichnungen

- Figur 1: ist eine schematische Ansicht, die eine Kantenanbringungsvorrichtung mit einer Ausführungsform der erfindungsgemäßen Einrichtung zeigt.

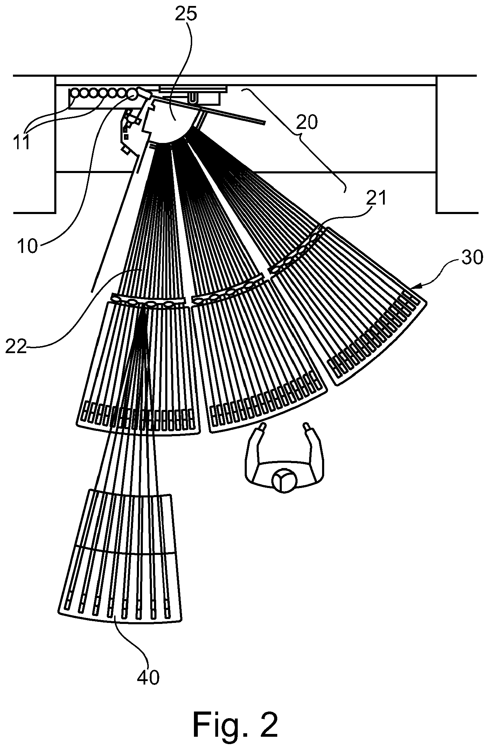

- Figur 2: ist eine Draufsicht, die eine Kantenanbringungsvorrichtung gemäß einer ersten Modifikation zeigt.
- Figur 3: ist eine schematische Seitenansicht, mit der das Einlegen eines Kantenbands in einen Aktor zum Bewegen des Kantenbands dargestellt wird.

Detaillierte Beschreibung der bevorzugten Ausführungsformen Nachfolgend wird anhand der beigefügten Figuren eine bevorzugte Ausführungsform der vorliegenden Erfindung im Detail beschrieben. Weitere in diesem Zusammenhang genannte Modifikationen können jeweils einzeln miteinander kombiniert werden, um neue Ausführungsformen auszubilden.

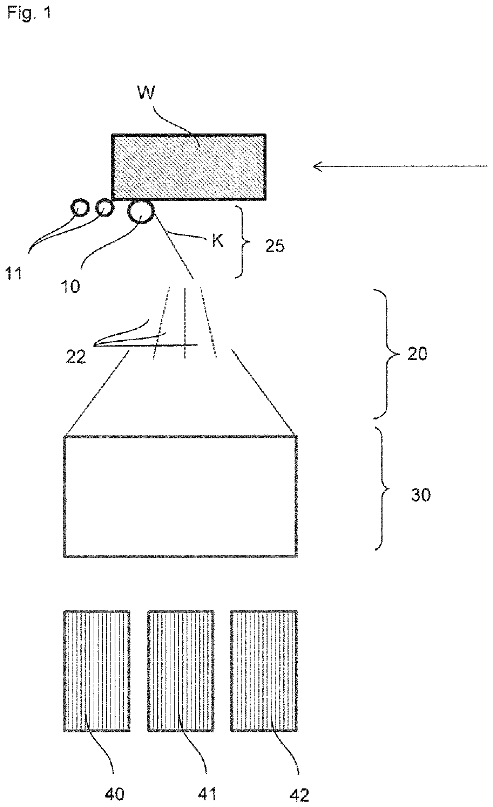

Die in Figur 1 dargestellte Kantenanbringungsvorrichtung umfasst eine Andruckrolle 10 sowie mehrere Nachdrückrollen 11, durch die ein Kantenband K (Meterware bzw. Beschichtungsmaterial) an eine Schmalfläche eines plattenförmigen Werkstücks W angedrückt wird. Bei dem genannten Kantenband K kann es sich um koextrudierte Kanten oder ein Kantenband handeln, welches mit einem Haftmittel versehen ist bzw. wird. Hierbei kann das Kantenband K mit dem Haftmittel vorbeschichtet sein, oder das Kantenband K wird kurz vor dem Andrücken des Kantenbands K an eine Schmalfläche eines Werkstücks W mit Haftmittel versehen.

Benachbart zur Kantenanbringungsvorrichtung ist ein Zuführabschnitt 20 vorgesehen, der in Figur 1 lediglich schematisch dargestellt ist.
In Zuführführungen 22 des Zuführabschnitts 20 können Kantenbänder K manuell, halbautomatisch oder vollautomatisch eingeführt und für die Anbringung an einem Werkstück W bereitgehalten werden. Hierzu weist der Zuführabschnitt 20 eine Vielzahl von Aktoren 21 auf, welche im Einlaufbereich der Zuführführungen 22 des Zuführabschnitts 20 vorgesehen sind.

Die Aktoren 21 können dabei rotierende Antreibmittel aufweisen oder sogenannte Lineareinheiten umfassen. Nachdem die Aktoren im Einlaufbereich des Zuführabschnitts 20 und somit nahe eines Ankoppelbereichs 30 vorgesehen sind, kann ein Einfädeln der Kantenbänder K leicht und zügig durchgeführt werden.

Nachdem die Kantenbänder K mittels der Aktoren 21 ergriffen und durch die Zuführführungen 22 geführt wurden, gelangen diese in jeweilige Zuführkanäle der Magazineinheit 25. Die Magazineinheit 25 ist derart ausgestaltet, dass in den Zuführkanälen jeweils ein Kantenband K in zugeschnittener Form gepuffert werden kann und somit zur Anbringung an einem Werkstück W vorgehalten wird.

Die Vielzahl der Zuführkanäle läuft auf eine Magazineinheit 25 zu, die sich nahe der Andruckrolle 25 befindet. In diesem Bereich gelangt ein Kantenband K aus dem jeweiligen Zuführkanal in den Abschnitt, in dem ein Haftmittel aufgetragen oder ein bereits auf dem Kantenband K befindliches Haftmittel mittels einer Energiequelle aktiviert wird, und nachfolgend mittels der Andruckrolle 11 an einer Schmalseite eines Werkstücks W angedrückt wird.

Die genannte Energiequelle kann ausgewählt werden aus einem Laser, einer Heißluftquelle bzw. einer Begasungsquelle, einer Infrarotquelle, einer Ultraschallquelle, einer Magnetfeldquelle, einer Mikrowellenquelle bzw. einer Plasmaquelle.

Ferner ist der Ankoppelbereich 30 benachbart zum Einlaufbereich des Zuführabschnitts 20 vorgesehen. Der Ankoppelbereich 30 ist eingerichtet, einzelne Moduleinheiten 40, 41, 42 aufzunehmen, so dass diese am Zuführabschnitt 20 angekoppelt werden können. Jede Moduleinheit ist dabei zur Aufnahme mehrerer Kantenbänder K vorgesehen, wobei die Kantenbänder K bevorzugt in einzelnen Kassetten aufgenommen werden.

Die Moduleinheiten 40, 41, 42 können dabei eine feste Rasterung für bestimmte Kassetten von Kantenbändern aufweisen, sodass in eine bestimmte Moduleinheit lediglich Kassetten bestimmter Breite eingewechselt werden können. Somit kann eine bestimmte Moduleinheit charakteristisch für eine bestimmte Art von Kantenbändern sein.

Alternativ ist es möglich, dass die Moduleinheiten 40, 41, 42 ohne Rasterung ausgebildet sind, und somit unterschiedliche Kassetten und somit Kantenbänder unterschiedlicher Breite aufnehmen können. Auf diese Weise kann die Flexibilität bei der Verwendung einer bestimmten Moduleinheit weiter erhöht werden. Auch ist es möglich, die Moduleinheiten für unterschiedliche Aufgaben zu verwenden, wobei bspw. in einem ersten Fall Kassetten mit Kantenbändern mit einer ersten Breite und in einem anderen Fall Kassetten mit Kantenbändern mit einer zweiten Breite eingesetzt werden.

Aufgrund der Moduleinheiten 40, 41, 42 können verschiedenste Kantenbänder K in die jeweilige Moduleinheit 40, 41, 42 beschickt werden, und nachfolgend die jeweilige Moduleinheit 40, 41, 42 in den Speicher 30 eingewechselt werden. Somit ist es möglich, Kantenbänder K gruppenweise auszuwechseln, und somit die Kantenaufbringvorrichtung auf eine neue Arbeitsschicht vorzubereiten. Der Maschinenbediener muss somit nicht einzelne Kassetten in einen Speicher benachbart zum Zuführabschnitt einlegen.

Ein solcher Austausch einzelner Kassetten im Bereich des Ankoppelabschnitts wäre zwar möglich. Allerdings sind die Moduleinheiten 40-42 als verfahrbare Wägen ausgebildet. Somit kann der Wagen an einem anderen Ort als dem Ankoppelabschnitt beschickt und nachfolgend zum Ankoppelabschnitt verfahren werden. Die Ankopplung stellt sicher, dass die Kantenbänder zum Einlegen in den Zuführabschnitt korrekt positioniert sind.

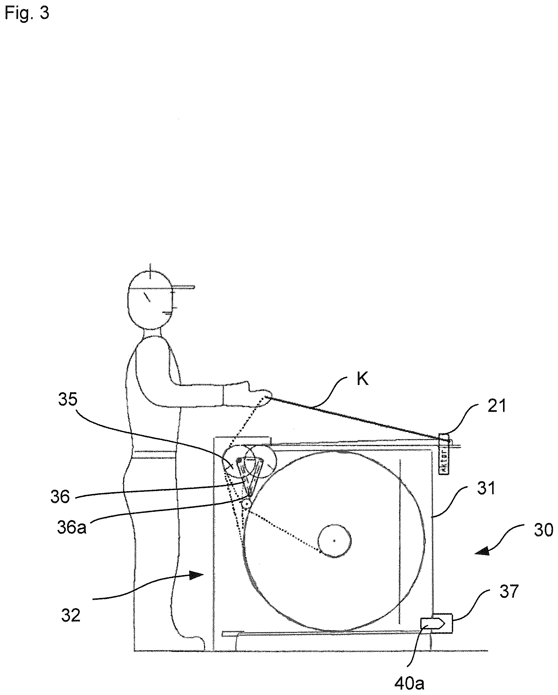

In Figur 3 wird schematisch das Einlegen eines Kantenbands K in einen Aktor 21 des Zuführabschnitts 20 dargestellt. Ein solches Einlegen bzw. Einfädeln des Kantenbands K ist erforderlich, wenn eine der Moduleinheiten 40, 41, 42 mit mehreren Kantenbändern ausgetauscht wird. Eine Ausrichtung und ggf. Fixierung einer Moduleinheit erfolgt, indem ein Einrastelement 40a dieser Moduleinheit in einer Einrastaufnahme 37 des Ankoppelabschnitts 30 eingeführt wird. Dabei ragt das Kantenband K, das in der jeweiligen Moduleinheit in einer Kassette aufgenommen ist, aus dem Speicher 30 hervor, und kann beim manuellen Einfädeln von einem Arbeiter aufgenommen und um eine Umlenkwalze 35, die in einem oberen Eckbereich des Speichers 30 vorgesehen ist, geführt werden. Die Umlenkrolle 35 ist dabei über ein Gelenk 36 gegenüber einer horizontal verlaufenden Achse 36a schwenkbar.

Ausgehend von der Umlenkwalze 35 wird das Kantenband K an der Oberseite des Speichers 30 entlang bewegt und in einen Aktor 21 eingelegt. Der Aktor 21 ergreift das Kantenband K, und kann dieses in den Zuführabschnitt 20, bzw. eine jeweilige Zuführführung 22 sowie nachfolgend einen entsprechenden Zuführkanal 26 bewegen.

Nachdem der Aktor 21 an einem der Umlenkwalze 35 gegenüberliegenden Endabschnitt des Speichers 30 angeordnet ist, und der Aktor 21 die Förderung des Kantenbands K übernimmt, kann ein Einfädeln und damit eine Inbetriebnahme zügig durchgeführt werden.

In einer weiteren Modifikation der vorliegenden Erfindung kann das Einfädeln des Kantenbandes K auch durch einen Roboterarm als ein Beispiel für eine Einlegeeinheit durchgeführt werden, der beispielsweise am Zuführabschnitt 20 angebracht ist. Der Roboterarm greift dabei einen Endabschnitt eines Kantenbands K, das nach dem Einwechseln der jeweiligen Moduleinheit 40, 41, 42 bevorsteht, und legt dieses Kantenband in einen Aktor 21 ein.

Darüber hinaus kann der Zuführabschnitt 20 gemäß einer weiteren Modifikation verkürzt ausgebildet sein, und lediglich die Magazineinheit 25 umfassen. Gemäß dieser Modifikation sind die Aktoren 21 an einem Einlaufabschnitt der Magazineinheit 25 vorgesehen, und die Zuführführungen 22 können weggelassen werden. Auf diese Weise wird die Tiefe des Zuführabschnitts 20 verkürzt.

Auch wenn in der bevorzugten Ausführungsform drei Moduleinheiten dargestellt sind, ist die vorliegende Erfindung nicht hierauf beschränkt.

## Patentansprüche

1. Einrichtung zum Zuführen eines Beschichtungsmaterials von einer Moduleinheit, welche Moduleinheit (40-42) zur Aufbewahrung und Bereitstellung von bevorzugt rollenförmigen oder wickelförmigen Beschichtungsmaterialeinheiten, insbesondere Kantenbändern (K) zur Anbringung an einer Schmalseite plattenförmiger Werkstücke (W), vorgesehen ist, zu einer Beschichtungsvorrichtung, aufweisend:
einen Zuführabschnitt (20) zur Aufnahme und zum Transportieren des Beschichtungsmaterials,
eine Magazineinheit (25) zum Führen des vom Zuführabschnitt (20) bereitgestellten Beschichtungsmaterials,
zumindest eine bewegbare Moduleinheit (40-42),
einen Ankoppelabschnitt (30) zum Ankoppeln der bewegbaren Moduleinheit (40-42) am Zuführabschnitt (20), welche Moduleinheit (40-42) Beschichtungsmaterialeinheiten aufnimmt,
**dadurch gekennzeichnet, dass**
der Ankoppelabschnitt (30) eine Einrastaufnahme (37), beispielsweise eine Öffnung, aufweist, die mit einem Einrastelement (40a) einer Moduleinheit (40-42) in Eingriff gebracht werden kann, wobei
der Ankoppelabschnitt (30) eine elektrische Schnittstelle aufweist, um die Moduleinheit (40-42) mit dem Zuführabschnitt elektrisch zu koppeln.

2. Einrichtung gemäß Anspruch 1, bei der die zumindest eine Moduleinheit (40-42) eingerichtet ist, Kassetten aufzunehmen, wobei jede Kassette eine Beschichtungsmaterialeinheit (K) aufnimmt.

3. Einrichtung gemäß Anspruch 2, bei der die zumindest eine Moduleinheit (40-42) eine Rasterung aufweist, um Kassetten bestimmter Breite aufzunehmen, oder
bei der die zumindest eine Moduleinheit (40-42) einen variablen Einschub aufweist, um Kassetten unterschiedlicher Breite aufzunehmen.

4. Einrichtung gemäß Anspruch 1, bei der die zumindest eine Moduleinheit (40-42) eine drehbare Achse oder einen Hüllkreis aufweist, um die Beschichtungsmaterialeinheiten aufzunehmen.

5. Einrichtung gemäß einem der vorangegangenen Ansprüche, bei der der Zuführabschnitt im Bereich des Ankoppelabschnitts (30) zumindest eine Umlenkwalze (35) aufweist, um ein Beschichtungsmaterial einer Beschichtungsmaterialeinheit von einer Bedienseite des Ankoppelabschnitts (30) zum Zuführabschnitt (20) zu führen.

6. Einrichtung gemäß einem der vorangegangenen Ansprüche, bei der der Ankoppelbereich zum Ankoppeln unterschiedlich dimensionierter Moduleinheiten (40-42) eingerichtet ist.

7. Einrichtung gemäß einem der vorangegangenen Ansprüche, bei der die Moduleinheit die rollenförmigen oder wickelförmigen Beschichtungsmaterialeinheiten derart aufnimmt, dass die Drehachse der Beschichtungsmaterialeinheiten horizontal ausgerichtet ist.

8. Einrichtung gemäß einem der vorangegangenen Ansprüche, bei der der Ankoppelabschnitt (30) einen Anschlussbereich aufweist, um die Moduleinheit (40-42) mit dem Zuführabschnitt hydraulisch, pneumatisch oder mechanisch zu koppeln.

9. Einrichtung gemäß einem der vorangegangenen Ansprüche, bei der der Zuführabschnitt (20) eine Vielzahl von Zuführführungen (22) aufweist, wobei (a) an einem Einlaufbereich jeder Zuführführung (22) ein separat steuerbarer Aktor (21), oder (b) ein zustellbarer Aktor (21) vorgesehen ist, wobei bevorzugt ist, dass
der zumindest eine Aktor (21) ein walzenförmiges Antreibmittel umfasst, oder der zumindest eine Aktor (21) als Linearaktor ausgebildet ist.

10. Einrichtung gemäß Anspruch 9, bei der am Zuführabschnitt (20) eine Einlegeeinheit, insbesondere ein Roboterarm mit einer Greifeinheit, zur Aufnahme eines Endes des in der Moduleinheit (40-42) vorgesehenen Beschichtungsmaterials angebracht ist.

11. Einrichtung gemäß einem der vorangegangenen Ansprüche, bei der der Ankoppelabschnitt (30) einen Rahmen (31) umfasst, der die angekoppelte Moduleinheit abschnittsweise umschließt.

12. Einrichtung gemäß einem der vorangegangenen Ansprüche, bei der die Moduleinheit (40-42) mit Rollen versehen ist, um die Moduleinheit (40-42) bewegen zu können.

13. Beschichtungsvorrichtung zur Anbringung eines Beschichtungsmaterials an einem bevorzugt plattenförmigen Werkstück (W), mit einer Einrichtung gemäß einem der vorangegangenen Ansprüche.

14. Verfahren zum Zuführen eines Beschichtungsmaterials unter Einsatz einer Einrichtung gemäß einer der Ansprüche 1-12, umfassend die Schritte:
Beschicken einer Moduleinheit mit zumindest einer Beschichtungsmaterialeinheit,
Bewegen der Moduleinheit zum Ankoppelabschnitt und
Ankoppeln der Moduleinheit am Zuführabschnitt.

## Claims

1. System for feeding a coating material from a modular unit to a coating device, which modular unit (40-42) is provided for storing and supplying preferably roll-shaped or coil-shaped coating material units, in particular edge bands (K) for application to a narrow side of planar workpieces (W), comprising:
a feed portion (20) for receiving and transporting the coating material,
a magazine unit (25) for guiding the coating material supplied by the feed portion (20),
at least one movable modular unit (40-42),
a coupling portion (30) for coupling the movable modular unit (40-42) to the feed portion (20), which modular unit (40-42) receives coating material units,
**characterised in that**
the coupling portion (30) comprises a latching socket (37), for example an opening, which can be brought into engagement with a latching element (40a) of a modular unit (40-42), wherein
the coupling portion (30) comprises an electric interface for electrically coupling the modular unit (40-42) to the feed portion.

2. System according to claim 1, in which the at least one modular unit (40-42) is designed to receive cartridges, wherein each cartridge receives a coating material unit (K).

3. System according to claim 2, in which the at least one modular unit (40-42) comprises a latching means for receiving cartridges of a particular width, or in which the at least one modular unit (40-42) comprises a variable slide-in module for receiving cartridges of different widths.

4. System according to claim 1, in which the at least one modular unit (40-42) comprises a rotatable axis or an enveloping circle for receiving the coating material units.

5. System according to any of the preceding claims, in which the feed portion comprises at least one deflection cylinder (35) in the region of the coupling portion (30) for guiding a coating material of a coating material unit from an operating side of the coupling portion (30) to the feed portion (20).

6. System according to any of the preceding claims, in which the coupling region is designed to couple modular units (40-42) of different dimensions.

7. System according to any of the preceding claims, in which the modular unit receives the roll-shaped or coil-shaped coating material units such that axis of rotation of the coating material units is oriented horizontally.

8. System according to any of the preceding claims, in which the coupling portion (30) comprises a connection region for hydraulically, pneumatically or mechanically coupling the modular unit (40-42) to the feed portion.

9. System according to any of the preceding claims, in which the feed portion (20) comprises a large number of feed guides (22), wherein (a) a separately controllable actuator is provided on an inlet region of each feed guide (22), or (b) an advanceable actuator (21) is provided, wherein it is preferable for the at least one actuator (21) to comprise a cylindrical drive means, or for the at least one actuator (21) to be designed as a linear actuator.

10. System according to claim 9, in which an insertion unit, in particular a robot arm having a gripping unit, is attached to the feed portion (20) for receiving an end of the coating material provided in the modular unit (40-42).

11. System according to any of the preceding claims, in which the coupling portion (30) comprises a frame (31), which encloses portions of the coupled modular unit.

12. System according to any of the preceding claims, in which the modular unit (40-42) is provided with rollers in order to be able to move the modular unit (40-42).

13. Coating device for applying a coating material to a preferably planar workpiece (W), comprising a system according to any of the preceding claims.

14. Method for feeding a coating material using a system according to any of claims 1-12, comprising the steps of:
loading a modular unit with at least one coating material unit,
moving the modular unit to the coupling portion, and
coupling the modular unit to the feed portion.

## Revendications

1. Appareil d'alimentation en matériau de revêtement depuis une unité modulaire, laquelle unité modulaire (40-42) est prévue pour conserver et fournir des unités de matériau de revêtement de manière préférée sous forme de rouleaux ou de bobines, en particulier des bandes de chant (K) destinées à être appliquées au niveau d'un petit côté de pièces (W) sous forme de panneau, vers un dispositif de revêtement, présentant :
une section d'alimentation (20) destinée à la réception et au transport du matériau de revêtement,
une unité formant magasin (25) destinée au guidage du matériau de revêtement fourni par la section d'alimentation (20),
au moins une unité modulaire (40-42) mobile,
une section de couplage (30) destinée au couplage de l'unité modulaire (40-42) mobile à la section d'alimentation (20), laquelle unité modulaire (40-42) accueille des unités de matériau de revêtement,
**caractérisé en ce que**
la section de couplage (30) présente un logement d'encliquetage (37), par exemple une ouverture, qui peut être mis en prise avec un élément d'encliquetage (40a) d'une unité modulaire (40-42), dans lequel
la section de couplage (30) présente une interface électrique, afin de coupler électriquement l'unité modulaire (40-42) à la section d'alimentation.

2. Appareil selon la revendication 1, dans lequel l'au moins une unité modulaire (40-42) est configurée pour accueillir des cassettes, dans lequel chaque cassette accueille une unité de matériau de revêtement (K).

3. Appareil selon la revendication 2, dans lequel l'au moins une unité modulaire (40-42) présente un crantage, afin d'accueillir des cassettes d'une certaine largeur, ou
dans lequel l'au moins une unité modulaire (40-42) présente une insertion variable, afin d'accueillir des cassettes de différentes largeurs.

4. Appareil selon la revendication 1, dans lequel l'au moins une unité modulaire (40-42) présente un axe rotatif ou un cercle enveloppant, afin d'accueillir les unités de matériau de revêtement.

5. Appareil selon l'une quelconque des revendications précédentes, dans lequel la section d'alimentation présente, dans la région de la section de couplage (30), au moins un rouleau de renvoi (35), afin de guider un matériau de revêtement d'une unité de matériau de revêtement depuis un côté de desserte de la section de couplage (30) jusqu'à la section d'alimentation (20).

6. Appareil selon l'une quelconque des revendications précédentes, dans lequel la région de couplage est configurée pour un couplage d'unités modulaires (40-42) de dimensions différentes.

7. Appareil selon l'une quelconque des revendications précédentes, dans lequel l'unité modulaire accueille les unités de matériau de revêtement sous forme de rouleaux ou de bobines de telle manière que l'axe de rotation des unités de matériau de revêtement est orienté horizontalement.

8. Appareil selon l'une quelconque des revendications précédentes, dans lequel la section de couplage (30) présente une région de raccordement, afin de coupler l'unité modulaire (40-42) à la section d'alimentation de manière hydraulique, pneumatique ou mécanique.

9. Appareil selon l'une quelconque des revendications précédentes, dans lequel la section d'alimentation (20) présente une pluralité de guides d'alimentation (22), dans lequel (a) un actionneur (21) manœuvrable de manière séparée est prévu au niveau d'une région d'entrée de chaque guide d'alimentation (22), ou (b) un actionneur (21) blocable est prévu, dans lequel de manière préférée
l'au moins un actionneur (21) comprend un moyen d'entraînement sous forme de rouleau, ou l'au moins un actionneur (21) est réalisé en tant qu'actionneur linéaire.

10. Appareil selon la revendication 9, dans lequel une unité d'insertion, en particulier un bras de robot avec une unité de préhension, destinée à accueillir une extrémité du matériau de revêtement fourni dans l'unité modulaire (40-42) est mise en place au niveau de la section d'alimentation (20).

11. Appareil selon l'une quelconque des revendications précédentes, dans lequel la section de couplage (30) comprend un châssis (31) qui enserre par sections l'unité modulaire couplée.

12. Appareil selon l'une quelconque des revendications précédentes, dans lequel l'unité modulaire (40-42) est munie de roulettes, afin de pouvoir déplacer l'unité modulaire (40-42).

13. Appareil de revêtement pour appliquer un matériau de revêtement sur une pièce (W) de manière préférée sous forme de panneau, avec un appareil selon l'une quelconque des revendications précédentes.

14. Procédé d'alimentation en matériau de revêtement avec utilisation d'un appareil selon l'une quelconque des revendications 1-12, comprenant les étapes consistant à :
charger une unité modulaire avec au moins une unité de matériau de revêtement,
déplacer l'unité modulaire vers la section de couplage et
coupler l'unité modulaire à la section d'alimentation.
